# EUROPEAN PATENT SPECIFICATION

(11) **EP 4 177 712 B1**
(45) Date of publication and mention of the grant of the patent: **12.08.2026**
(21) Application number: 21207224.3
(22) Date of filing: 09.11.2021
(51) Int. Cl.: G06F 3/01

(54) **METHOD AND SYSTEM FOR CHARACTERIZING EYE MOVEMENTS**
VERFAHREN UND SYSTEM ZUR CHARAKTERISIERUNG VON AUGENBEWEGUNGEN
PROCÉDÉ ET SYSTÈME PERMETTANT DE CARACTÉRISER DES MOUVEMENTS OCULAIRES

(43) Date of publication of application: 10.05.2023
(73) Proprietor: Pupil Labs GmbH, 12047 Berlin (DE)
(72) Inventor: DREWS, Michael, 10781 Berlin (DE); DIERKES, Kai, 10245 Berlin (DE)
(74) Representative: Zimmermann & Partner Patentanwälte mbB

(56) References cited:
- WO-A1-2020/147948
- US-A1- 2011 085 700
- KOTHARI RAKSHIT ET AL: "Gaze-in-wild: A dataset for studying eye and head coordination in everyday activities", vol. 10, no. 1, 1 December 2020 (2020-12-01), pages 2539, XP055913441, Retrieved from the Internet <URL:https://www.nature.com/articles/s41598-020-59251-5.pdf> DOI: 10.1038/s41598-020-59251-5
- MARC TONSEN ET AL: "A High-Level Description and Performance Evaluation of Pupil Invisible", ARXIV.ORG, CORNELL UNIVERSITY LIBRARY, 201 OLIN LIBRARY CORNELL UNIVERSITY ITHACA, NY 14853, 1 September 2020 (2020-09-01), XP081753387
- MARC TONSEN ET AL: "InvisibleEye : Mobile Eye Tracking Using Multiple Low-Resolution Cameras and Learning-Based Gaze Estimation", PROCEEDINGS OF THE ACM ON INTERACTIVE, MOBILE, WEARABLE AND UBIQUITOUS TECHNOLOGIES, vol. 1, no. 3, 11 September 2017 (2017-09-11), pages 1 - 21, XP055688741, ISSN: 2474-9567, DOI: 10.1145/3130971

## Description

### TECHNICAL FIELD

Embodiments of the present invention relate to a method for characterizing eye movements of a user, in particular a user wearing a head-wearable device that may be used for eye tracking, and to a related system.

### BACKGROUND

Portable eye tracking devices, for example in the form of head-wearable spectacle-like systems offer many advantages over stationary, remote eye tracking systems when it comes to the range of possible application scenarios and use cases. Outdoor activities like sports or tasks like operating large machinery are examples for eye tracking application areas in which free head and body movement is required and for which head-worn devices are thus the solution of choice.

When studying eye tracking signals from head-worn eye trackers, characterizing eye movements of a user is still challenging for many real applications. This applies in particular to detecting fixations. Fixations are one of the most relevant features in eye-tracking research and used to make inferences about cognitive processes. When viewing their environment, humans typically move their eyes in discrete steps so that short periods of fixations are interleaved with rapid saccades, essentially scanning the whole visual scene, or at least parts of it. A fixation is essentially a time period when the view point of the observer rests on a specific object in the visual scene in order to take in detailed visual information. Only in head-fixed scenarios, computational algorithms for fixation detection typically work well. When the head of the subject whose eyes are being tracked remains still, dispersion-based algorithms or velocity-based methods may be used to detect stationary gaze direction. Dispersion-based algorithms measure the spread of consecutive gaze points in a time window around a given gaze sample and classify the sample as belonging to a fixation if the dispersion is below a given threshold. Velocity-based methods, on the other hand, measure the velocity of the gaze point (or the eye itself) and then apply a velocity threshold to classify all samples with low velocity into fixations. However, severe challenges are posed to these approaches in freely moving and dynamic scenarios: humans can fixate on an object with their eyes while simultaneously moving their head, due to reflexive eye movements which compensate for the motion of the head. This phenomenon is known as vestibulo-ocular reflex (VOR). Furthermore, in a dynamic environment, the eyes can fixate on moving objects, such as passers-by or cars, a phenomenon which is called smooth pursuit (SP) in eye movement terminology. Furthermore, the whole scene could move, e.g. the observer could be inside of a moving vehicle looking outside the window. In this situation, humans often perform so-called optokinetic nystagmus (OKN). Here, the eyes alternate between a smooth movement following one point in the scene before rapidly jumping back to a new point of fixation, essentially creating a saw-tooth pattern with respect to gaze position. In all cases, VOR, SP and OKN, the eyes perform smooth directional movements with respect to the head, which means that neither dispersion nor velocity of the gaze point or eye as measured with a head-mounted camera can be expected to be small during such fixation events. On the contrary, dispersion and velocity of the gaze point, respectively, may even be large, depending on the magnitude of head or object motion. Therefore, the known threshold-based algorithms are not reliable in these types of scenarios. Prior Art is known from US 2011/085700.

Accordingly, there is a need to further improve the characterization of eye movements of users, in particular with regard to flexibility and adaptability to different use cases.

### SUMMARY

According to an embodiment of a method for characterizing eye movements of a user, the method includes generating a sequence of scene images of a scene in a field of view of the user, and generating a corresponding sequence of eye images of at least a portion of an eye of the user. The sequence of scene images is used to determine a first signal referring to a motion. The sequence of eye images is used to determine a second signal referring to a motion of the eye of the user. A difference signal corresponding to a difference between the second signal and the first signal is determined. A characteristic of the eye movements of the user is determined based on the difference signal.

Accordingly, the eye movements of a user during looking at a scene may be reliably characterized and/or classified also in scenarios in which the user performs eye movements with respect to the head, in particular due to VOR, OKN and/or SP.

The characteristic of the eye movements of the user may be determined based at least in part, typically based substantially or even only on the difference signal.

Further, the characteristic of the eye movements may be determined as a discrete function of time.

The first signal may refer to or even correspond to a motion reflected in the sequence of scene images, in particular to a motion in the sequence of scene images and/or a motion of a head of the user as function of time.

More particular, the first signal may, at least in a time interval, refer or even correspond to a velocity in the sequence of scene images as function of time. The first signal may only refer or correspond to the velocity in the sequence of scene images as a function of time, when the user does not move the head during observation of the scene.

If the scene corresponds to a still or static scene, the first signal may only refer to or correspond to a motion of the user's head.

Whether the first signal refers to a motion in the sequence of scene images, to a motion of a head of the user, or to both the motion in the sequence of scene images and the motion of the user's head may change over time.

Typically, the second signal (only) refers to (depends on) a motion of the user's eye, in particular a velocity of the user's eye.

For example, the second signal may refer to a motion of the user's eye with respect to the user's head.

Alternatively or in addition, the second signal may refer to a gaze point velocity of an eye of the user as a function of time.

The first signal and the second signal both refer to respective motion(s), but are different from each other.

In the following, the first signal and the second signal are also referred to as first motion signal and second motion signal, respectively.

According to an embodiment of a system for characterizing eye movements of a user, the system includes a head-wearable device including a scene camera configured to generate a sequence of scene images of a scene in a field of view of the user wearing the head-wearable device, and an eye camera configured to generate a sequence of eye images of at least a portion of an eye of the user wearing the head-wearable device, and a computing unit. The computing unit is connectable with the scene camera for receiving the sequence of scene images, connectable with the eye camera for receiving the sequence of eye images, and configured to use the sequence of scene images to determine a first signal, and using the sequence of eye images to determine a second signal referring to a motion of the eye of the user, to determine a difference signal corresponding to a difference between the second signal and the first signal.

The computing unit may be implemented as a controller, in particular as a respective controller provided by the head-wearable device or a companion device connectable to the head-wearable device, more particular as a mobile companion device such as a smartphone, tablet or laptop. Alternatively, the computing unit may be provided by a local desktop or server, or by a remote desktop or server.

The system is typically configured to perform the methods as explained herein.

The head-wearable device is typically implemented as (head-wearable) spectacles device comprising a spectacles body, which is configured such that it can be worn on a head of the user, for example in a way usual glasses are worn. Hence, the spectacles device when worn by a user may in particular be supported at least partially by a nose area of the user's face. The head-wearable device may also be implemented as an augmented reality (AR-) and/or virtual reality (VR-) device (AR/VR headset), in particular a goggles, an AR head-wearable display, and a VR head-wearable display. For the sake of clarity, head-wearable devices are mainly described with regard to head-wearable spectacles devices in the following.

According to an embodiment, a computer program product or a computer-readable storage medium includes instructions which, when executed by one or more processors of a system, typically a system including a head-wearable device and a computing unit as explained herein, cause the system to perform the methods as explained herein.

Those skilled in the art will recognize additional features and advantages upon reading the following detailed description, and upon viewing the accompanying drawings.

### BRIEF DESCRIPTION OF THE DRAWINGS

The components in the figures are not necessarily to scale, instead emphasis being placed upon illustrating the principles of the invention. Moreover, in the figures, like reference numerals designate corresponding parts. In the drawings:
Fig. 1A to Fig. 2B schematically illustrate a method for characterizing eye movements of a user according to an embodiment;
Figs. 3A/B show example data obtained with a method as explained with regard to Figs. 1A to Fig. 2B;
Figs. 4A/B illustrate flow charts of a method for characterizing eye movements of a user according to embodiments;
Fig. 5A shows examples of parameters usable in post-processing steps;
Fig. 5B shows examples of velocity thresholds according to embodiments;
Fig. 6A shows an example of eye movement characterization accuracy; and
Fig. 6B illustrates a perspective view of a system including a head-wearable device characterizing eye movements of a user according to an embodiment.

For sake of clarity, some of the Figures are provided with a respective Cartesian coordinate system typically representing a scene camera coordinate system.

### DETAILED DESCRIPTION

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

According to an embodiment of a method for characterizing eye movements of a user, the method includes generating a sequence of scene images of a scene in a field of view of the user, and generating a corresponding sequence of eye images of at least a portion of an eye of the user. A first signal referring to a motion is determined using the sequence of scene images. A second signal referring to a motion of the eye of the user is determined using the corresponding sequence of eye images. A difference signal between the second signal and the first signal is determined. A characteristic of the eye movements of the user is determined based on the difference signal, for example a classification of the eye movements into one of several categories.

The sequence of scene images may be provided as a video stream of the scene in the field of view of the user, as for example taken by a scene camera of a head-wearable device worn by the user looking at the scene.

The scene is typically a real scene. However, the scene may also at least in part be provided by a screen, either a remote/separate screen or display like a movie screen or a display of a head-wearable device implemented as an AR-device and/or an VR-device.

As already explained above, the first signal may reflect a motion in the sequence of scene images and/ or a motion of the user's head.

The first signal may in particular correspond to a velocity in the sequence of scene images as a function of time. The velocity may represent (correspond to) or be a velocity of the scene as a whole. In the latter case, a motion of the scene camera and/or the head may be reflected in the first signal.

Alternatively or in addition, first signal and the velocity in the sequence of scene images as function of time, respectively, may represent or be a velocity of a part of the scene. Further, the velocity in the sequence of scene images may represent the velocities of two or more parts of the scene, for example an averaged velocity of the scene parts.

The first signal may in particular correspond to a motion of the scene as a whole or one or more parts or objects thereof in the sequence of scene images with respect to the scene camera and/or a head of the user.

The corresponding sequence of eye images is typically generated using an eye camera of the head-wearable device.

That the sequence of eye images corresponds to the sequence of scene images intends to describe that the eye images can be assigned to the scene images (and/or vice versa) in a chronologically defined way.

Note that corresponding scene and eye images may also be used to determine what the user is looking at (at a given time).

The sequence of scene images and the sequence of eye images may in particular be recorded in the same time interval, however not necessarily at the same times and/or sampling rates.

In particular, in embodiments in which the corresponding scene images and eye images are determined (recorded) at least substantially at the same time, the time dependent difference signal may be directly calculated as the difference between the second signal and the first signal.

Alternatively, determining the time dependent difference signal may include post-processing the first signal and/or the second signal, for example via smoothing and/or interpolating the respective signal.

Due to the smoothing, measurement noise may be reduced.

Further, differences of sampling rates and/or time-shifts between corresponding first signal and the second signal may be compensated.

For example, the second signal may be determined at a higher sampling rate compared to the first signal. In this embodiment, the optionally smoothed first signal may be upsampled to the sampling rate of the second signal, for example by linear interpolation, and the difference signal may be determined as difference between the typically smoothed second signal and the upsampled (smoothed) first signal.

For many applications, the motion of the eye may refer to the motion of one eye of the user.

However, it is also possible that the second signal refers to a motion of both eyes of the user, for example an averaged motion of both eyes. This may also help to reduce noise.

In these embodiments, the sequence of eye images may be a sequence of eye image pairs, in particular pairs of images of at least a respective portion of the left eye and the right eye of the user, or a sequence of concatenated left and right eye images each showing at least a respective portion of the left eye and the right eye of the user.

Further, the corresponding sequence of eye images may be generated using two respective eye cameras of the head-wearable device, in embodiments in which the second signal refers to a motion of both eyes of the user, in particular with respect to the user's head and a coordinate system fixed with respect to the head-wearable device, respectively, e.g. a coordinate system defined by the head-wearable device worn by the user.

The recorded eye images do not necessarily need to be pictures as visible by the human eye, but can also be an appropriate representation of the recorded (filmed) eye in a range of light non-visible for humans.

The recorded eye images may be used for determining one or more gaze-related parameters of a user wearing the head-wearable device.

The gaze-related parameter can be a gaze-direction related parameter such as a gaze direction, one or more eye rotation angles, a cyclopean gaze direction, a 3D gaze point, a 2D gaze point, a visual axis orientation, an optical axis orientation, a pupil axis orientation, and a line of sight orientation of the user.

The second signal may correspond to a velocity of such a gaze-direction related parameter, in particular a velocity of a 2D or 3D gaze point or a rotational velocity of an eye.

The second signal may be determined using a trained neural network (NN), in particular a trained convolutional neural network (CNN).

For example, the eye images may be fed to an input layer of the NN and return a corresponding gaze-direction related parameter in an output layer. Therefrom, the velocity of the gaze-direction related parameter may be calculated.

Alternatively, (pairs of) subsequent eye images may be fed to an input layer of another trained NN which directly returns the function values of the second signal at a corresponding time.

In a different alternative, the second signal may be determined using classical computer vision methods.

For the sake of clarity, the following description mainly refers to embodiments in which the sequence of eye images is a sequence of eye images of one of the user's eyes, in particular with respect to the user's head and the coordinate system fixed with respect to the head-wearable device, respectively.

Further, the first signal and the second signal may be determined with respect to other coordinate systems as well, for example a common coordinate system fixed with respect to a display displaying the scene the user is looking at.

Furthermore, the first signal and the second signal refer to comparable physical quantities (having the same unit), in particular corresponding velocities, such that said difference signal can be calculated, as is apparent to the skilled person.

In one embodiment, the second signal corresponds to a (translatory) velocity of a gaze point of the user as function of time, and the first signal corresponds to a (translatory) velocity in the sequence of scene images (as function of time), for example respective velocities determined with respect to a common coordinate system of the scene camera. For example, the velocity of the gaze point and the velocity of the motion in the sequence of scene images may be determined in pixels per second (pixels/s).

In another embodiment, the second signal corresponds to a rotational speed of the user's eye as function of time, and the first signal corresponds to a rotational speed in the sequence of scene images (°/s).

In yet another embodiment, the second signal corresponds a velocity of a gaze direction of the user and the first signal corresponds to a velocity of a direction of a part in the sequence of scene images which are both determined with respect to the common coordinate system (e.g. defined by the scene camera).

Determining the first signal typically includes processing the sequence of scene images with an optical flow algorithm to determine at least one optical flow vector as function of time for the sequence of scene images, for example at least one respective optical flow vector for pairs of subsequent scene images.

This allows for reliably and robustly determining if the user's gaze is merely compensating head motion with respect to the scene while the user's gaze rests statically on some part or object of the scene (VOR), or if the user's gaze is following a motion of an object in the scene (SP, OKN). This is in particular achieved by comparing representative optical flow vectors for pairs of subsequent images, for example global optic flow representing overall movement of the scene with respect to the head and/or local optic flow at the position of or around the gaze point in the scene image, with the gaze or eye velocity vectors at that time.

The optical flow vector may be determined for each pixel, for a selection of pixels, for the entire scene images, or for a neighbourhood of the gaze point in the scene images and pairs, typically by applying the optical flow algorithm to subsequent pairs of scene images.

Alternatively, the scene image may be segmented into one or more objects and a representative optical flow vector may be calculated for at least one, several or even each object.

In one embodiment, a respective averaged optical flow vector is determined for each pair of a sequence of pairs of scene images.

Each of the first signal and the second signal may be determined as a vector function of time, for example as an averaged or representative optical flow vector as function of time and velocity vector of the user's gaze point or eye movement as function of time, respectively.

In this embodiment, the (time dependent) difference signal may be determined as vector difference between second signal and the first signal or based thereon, for example as (time dependent) length (magnitude) of the vector difference or function thereof.

The first signal and the second signal may also be determined as respective scalar functions of time, the function value of which may be based on at least one component or element of the respective vector.

Surprisingly, using only one component or element of the respective vector to determine the first signal and second signal, respectively, and determining the difference signal based thereon is found to already yield reliable and accurate results with respect to determining (time dependent) characteristics of the eye movements and classifying the eye movements, respectively.

Note that the first and the second signals may be discrete in time, e.g. a respective table, array or list, but also continuous in time (after post-processing).

Likewise, the characteristic of the eye movements is typically determined as a discrete signal in time such as a respective table, array or list, but may also be continuous in time.

In one embodiment, a global optical flow vector is calculated for each pair of subsequent scene images as the representative optical flow vector for each pair of subsequent scene images.

A velocity vector field may be determined for each pair of corresponding pixels of the pairs of subsequent scene images or for a subset of pairs of corresponding pixels of the pairs of subsequent scene images. In particular, a predetermined or fixed sparse subset of scene image locations and scene image pixels can be used.

Using sparse subsets reduces computational effort but has, surprisingly, been found to still result in reliable eye movement characterization and classification.

The subset may be close to at least one of the gaze points, more typically close to both corresponding gaze points in the two scene images. The subset may be restricted to a neighborhood of the gaze point(s), and as such for a non-fixed sparse subset of typically predetermined size. Both can contribute to a particularly high ratio of the quality of the eye movement determination/characterisation to numerical effort.

Alternatively, the subset may be distributed over the entire scene image(s).

Depending on the choice of the velocity vector field to be determined, a particularly suitable optical flow algorithm may be used. For example, a sparse optical flow algorithm, in particular a Lucas-Kanade algorithm, may be used to calculate sparse velocity vector fields.

Likewise, a dense optical flow algorithm, in particular the Farneback algorithm, may be used to calculate dense or full velocity vector fields.

Further, the velocity vector fields may be averaged to determine the representative optical flow vector for the pairs of subsequent scene images.

Determining the characteristic of the eye movements typically includes comparing the difference signal (at one or more times) with at least one threshold, in particular a respective predetermined threshold. For example, the threshold may be a predetermined number of pixels/second or a predetermined number of degrees per second [°/s].

This results in a simple but reliable and robust algorithm.

More particular, absolute values of function values of the difference signal may be compared with a respective threshold.

The threshold may be an adaptive threshold, e.g. based on the first signal, in particular based on an optic flow magnitude, and/or may be based on the second signal, in particular based on an estimate of noise in the gaze velocity signal.

Characterising and/or classifying the eye movements may also be based on checking if the function values of the difference signal lie within a predetermined range.

For example, a saccade event may be detected if the function values of the difference signal lie outside the range and/or are larger than the threshold.

Likewise, a fixation event may be detected if the function values of the difference signal remain, at least for a typically predetermined time interval, within the range, and/or are smaller than or equal to the threshold(s).

Eye movements may be classified into more than two classes. For example, fixations can be further classified into normal fixations, VOR, OKN and SP fixations.

Thus, a raw sequence of alternating saccade events and fixation events in time may be detected. This raw sequence may be further post-processed.

Such post-processing steps can for example include removal of micro-saccades (very small and short eye movements) and/or removal of fixations which are too short to be physiologically plausible. Different thresholds can be used for these post-processing steps.

In some embodiments, such thresholds constitute post-processing parameters which can be chosen or optimized in dependence of each other and/or in dependence of the velocity thresholds or ranges used to create the raw sequence.

The final sequence of detected events, such as alternating saccade events and fixation events may be further analysed.

This may e.g. be used to draw conclusions on how the scene is perceived, what is particularly interesting for the user and/or if the user, e.g. a driver of a vehicle or an operator of a machine is focussed on the scene or is getting tired or distracted, or to make inferences about other cognitive processes.

Reference will now be made in detail to various embodiments, one or more examples of which are illustrated in the figures. Each example is provided by way of explanation, and is not meant as a limitation of the invention. For example, features illustrated or described as part of one embodiment can be used on or in conjunction with other embodiments to yield yet a further embodiment. It is intended that the present invention includes such modifications and variations. The examples are described using specific language which should not be construed as limiting the scope of the appended claims. The drawings are not scaled and are for illustrative purposes only. For clarity, the same elements or manufacturing steps have been designated by the same references in the different drawings if not stated otherwise.

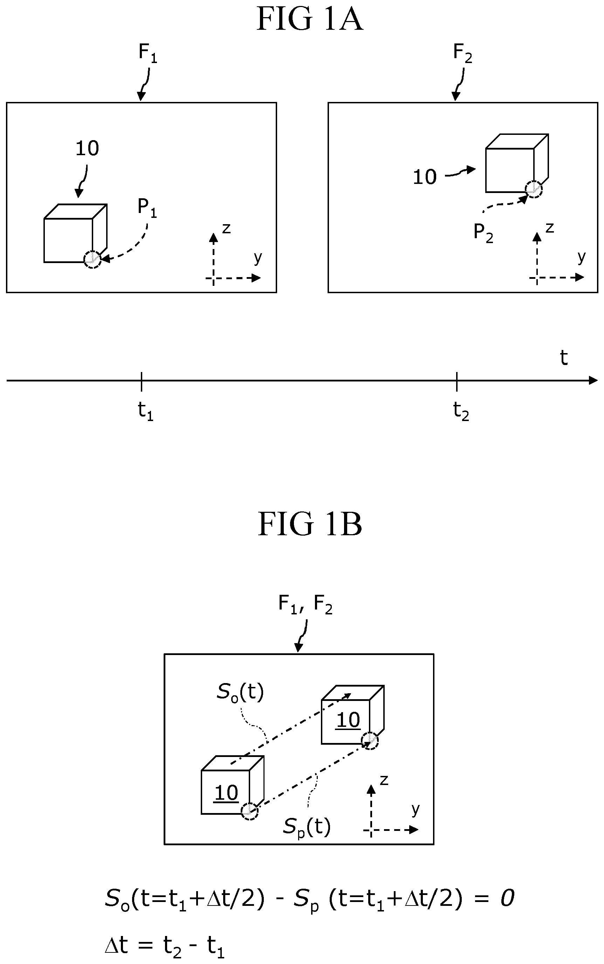

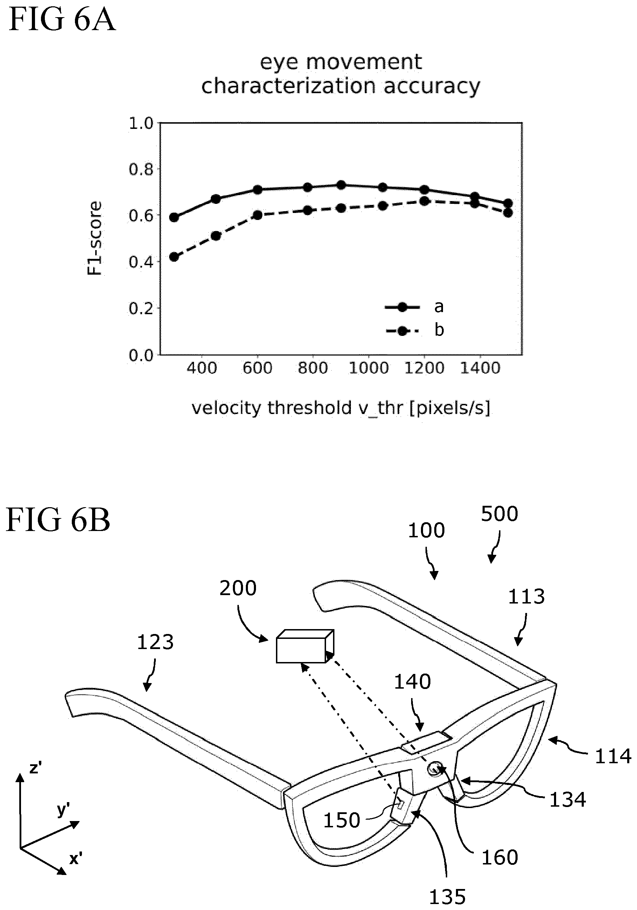

Fig. 1A to Fig. 2B schematically illustrate a method for characterizing eye movements of a user wearing a head-wearable device with a scene camera and an eye camera as explained below in more detail with respect to Fig. 6B.

In Fig. 1A to Fig. 2B, points and directions are specified within the scene camera images F1, F2, F3, of a scene camera coordinate system y, z. Alternatively, a head-wearable device coordinate system, a head coordinate system, a world coordinate system and/or any other suitable coordinate system may be used.

The three exemplary scene camera images F₁, F₂, F₃ are recorded at subsequent times t₁, t₂, t₃ (see also the arrow of time t).

Each scene camera image F₁, F₂, F₃ shows a scene with an exemplary cubical object 10 and in addition respective gaze points P₁, P₂, P₃ determined based on eye images obtained with an eye camera of the head-wearable device.

As illustrated in figure 1A, the user's gaze is centred on the lower right corner of object 10 a time t₁. At time t₂, the object 10 has moved to a different position in scene camera space. The user's gaze is still centred on the lower right corner of object 10.

Figure 1B is an overlay of scene camera images F₁, F₂ and shows in addition the velocity vector So(t) of object 10 (forming the first signal in the exemplary embodiment) in the sequence of scene images (F₁, F₂, F₃) at time t=t₁+Δt/2 with Δt=t₂- t₁, and the velocity of the gaze point Sp(t) (forming the second signal in the exemplary embodiment) at time t=t₁+Δt/2.

Since both vectors *S*p(t₁+Δt/2) and *S*o(t₁+Δt/2) are equal, the difference signal
$ΔS \left({t}_{1}+Δt/2\right) = Sp \left({t}_{1}+Δt/2\right) - So \left({t}_{1}+Δt/2\right) = 0$ is zero (zero vector) in the exemplary idealized embodiment. This may indicate a fixation event.

Different thereto, the user's gaze point P₃ is no longer centred on the lower right corner of object 10 at subsequent time t₃.

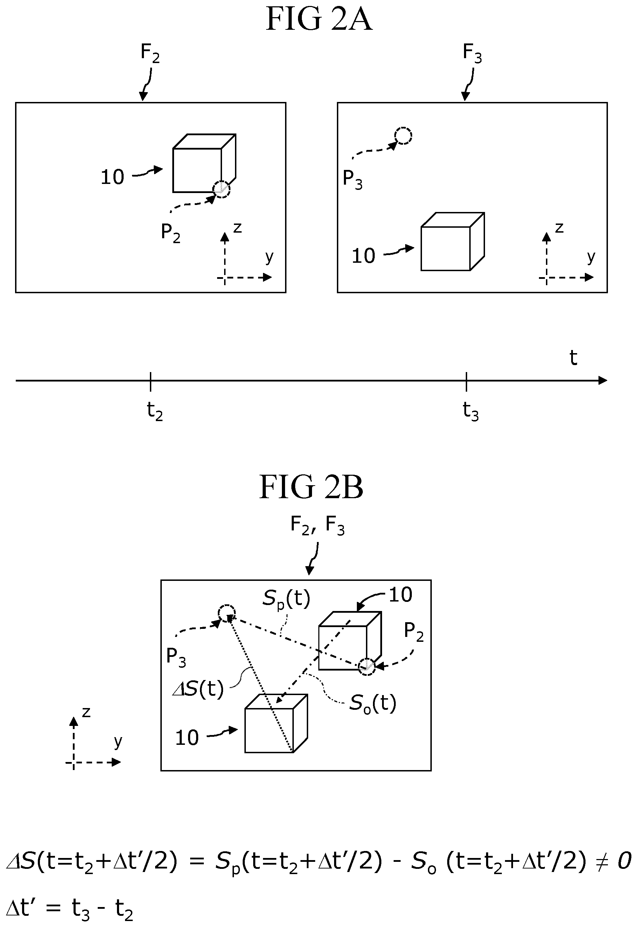

Figure 2B is an overlay of scene camera images F₂, F₃ including the gaze points P₂, P₃ as well as the velocity vector So(t) of object 10 at time t=t₂+Δt'/2 with Δt'=t₃- t₂, and the resulting velocity vector of the gaze point Sp(t) at time t=t₂+Δt'/2.

This time the difference signal
$ΔS \left({t}_{2}+Δt'/2\right) = Sp \left(\left({t}_{2}+Δt'/2\right)\right) - So \left({t}_{2}+Δt'/2\right) < > 0$ is different from zero, i.e. a non-zero vector. This may indicate a non-fixation event or saccade.

Thereafter, the time dependent difference signal Δ*S*(t) is thresholded and typically post-processed.

As further post-processing steps which may be applied after velocity thresholding of the difference signal according to embodiments, spurious micro-saccades may be filtered out. These are events or eye movements which are classified as saccades but are small and short, i.e. have an amplitude below a given angular threshold a_thr and duration below a given time threshold t_thr, e.g. smaller than 1,5° and shorter than 60 ms. When removing a saccade, neighbouring fixation events are merged.

As a further post-processing step, an event can be classified as fixation event only if it lasts long enough in accordance with a predetermined time interval l_min. Accordingly, too short, non-physiological apparent fixation events can be removed, e.g. such lasting less than 60 ms.

The optimal values for the thresholds/parameters a_thr, t_thr and l_min may be dependent on each other and on the velocity threshold v_thr which is applied to the difference signal. Independently, the velocity threshold v_thr may be dependent on either or both of the first and second signal.

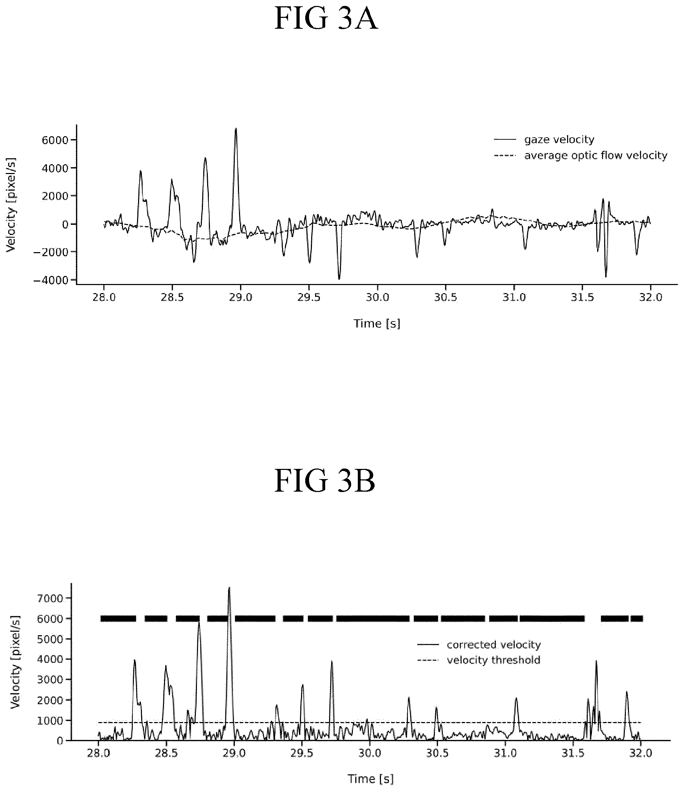

Fig. 3A/B shows example data obtained with a method as explained with regard to Figs. 1A to Fig. 2B.

A user wearing a head-wearable device as shown in Fig. 6B observes a real scene. During this time, scene images were taken with a scene camera of the head-wearable device at a rate of 30 Hz, and eye images were taken with an eye camera of the head-wearable device at a higher rate, 200 Hz in the exemplary embodiment.

For each eye image a 2D gaze point of the user was determined.

As a second signal referring to a motion of the eye of the user, a gaze velocity was computed as the first derivative of the smoothed gaze location/point signal, to reduce the impact of measurement noise. An example of a suitable smoothing filter is the Savitzky-Golay filter.

Further, to obtain a first signal referring to a motion reflected in the sequence of scene images, a global optical flow vector was calculated for each pair of subsequent scene images, and then upsampled from the scene camera frame rate to the frame rate of the eye camera and the second signal, respectively, by linear interpolation.

In the exemplary embodiment, the Lucas-Kanade algorithm was used to compute sparse optical flow on a sparse grid of points with a spacing of 100 pixels, evenly distributed over the scene images having a resolution of 1080x1088 pixels.

As already explained above, other algorithms for calculating sparse optical flow may be used. Alternatively, dense optic flow for each pixel may be calculated by using, e.g., the Farneback algorithm.

After applying the Lucas-Kanade algorithm, for each of the scene image pairs all optic flow vectors were averaged to calculate an averaged global optic flow (as function of time).

This was found to yield a robust estimate of the optical flow due to head motion.

Alternatively, local optic flow may be calculated by averaging optical flow vectors only in a defined neighbourhood around the gaze point. Computing local optic flow results in an algorithm that is robust even in the presence of inhomogeneous optical flow fields. This may occur in smooth pursuit scenarios, in particular when only a part of the visual scene is moving, or in the presence of, e.g., parallax effects due to parts of the visual scene being placed at large distances from each other. Note further that head motion typically only results in rotations of the visual scene in camera space, and can be captured by global optic flow already.

After determining upsampled averaged global optic flow vectors as the first signal, the difference vector between the second signal and the first signal is calculated for each time an eye image was taken.

As illustrated in Fig. 3A/B, the absolute values of the resulting difference vectors or one of their components may be used as an input to a velocity-based fixation detector.

In the exemplary embodiment, the fixation detector classifies all samples with a difference vector smaller than a predefined threshold of 900 pixels/s as part of a fixation. After that, post-processing filters remove fixations which are too short and hence not physiological. Additionally, fragments of fixations separated by gaps ("micro-saccades") shorter than 60 ms and of amplitude below 1.5° were merged.

In Fig. 3B ground truth annotations of the corresponding video data are indicated as a horizontal bar at the top, in which a human annotator has classified video frames as either belonging to a fixation (black areas) or saccadic eye movements (white gaps).

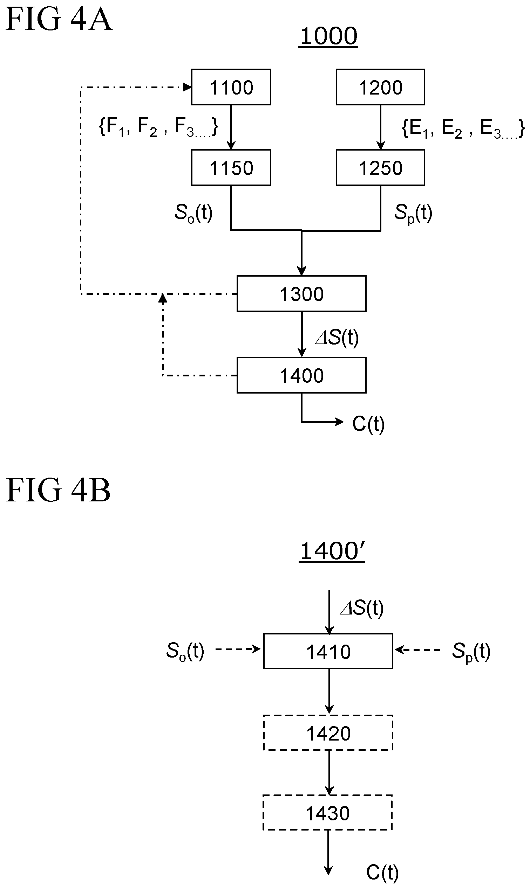

Fig. 4A illustrates a flow chart of a method 1000 for characterizing eye movements of a user wearing a head-wearable device having a scene camera and an eye camera as shown in Fig. 6B.

While the user is looking at a scene, a sequence of scene images {F₁, F₂, F₃,... }, and a corresponding sequence of eye images {E₁, E₂, E₃,...} of at least a portion of an eye of the user is recorded using the scene camera and the eye camera, respectively, in respective blocks 1100, 1200.

The sequence of scene images {F₁, F₂, F₃,... } and the corresponding sequence of eye images {E₁, E₂, E₃,...} may be recorded as respective video streams.

Thereafter, a first signal So(t) referring and/or corresponding to a motion in the sequence of scene images and/or a motion of the user's head, and a second signal Sp(t) referring and/or corresponding to a motion of the eye of the user are determined based on the sequence of scene images {F₁, F₂, F₃,...} and the sequence of eye images {E₁, E₂, E₃,...}, respectively, in blocks 1150 and 1250.

In a subsequent block 1300, a difference signal Δ*S*(t) between the second signal Sp(t) and the first signal So(t) is calculated.

Thereafter, the eye movements of the user may be characterised and/or classified based on the difference signal Δ*S*(t).In particular, a time dependent characteristic C(t) of the eye movements may be calculated in block 1400.

The processes explained with respect to blocks 1100 to 1400 may also be described as: generating, in blocks 1100, 1200, a sequence of scene images {F1, F2, F3... } of a scene in a field of view of the user, and a corresponding sequence of eye images {E1, E2, E3...} of at least a portion of an eye of the user; determining, in blocks 1150, 1150, a first motion signal So(t) based on the sequence of scene images {F1, F2, F3...} and a second motion signal Sp(t) based on the corresponding sequence of eye images {E1, E2, E3... }; determining, in block 1300, a difference signal Δ*S*(t) between the second signal Sp(t) and the first signal So(t), and characterizing, in block 1400, eye movements of the user based on the difference signal ΔS(t).

Fig.4B shows a flow chart of a method 1400' in which a velocity threshold (v_thr) is applied to the difference signal Δ*S*(t) in a block 1410 for characterizing eye movements of a user. The difference signal Δ*S*(t) may be obtained as explained above with regard to Fig. 4A. Afterwards and optionally, as indicated by dashed blocks, post-processing filters may remove micro-saccades in a block 1420, if the maximum amplitude of the corresponding eye movement is below a given threshold (a_thr) and the duration of the saccade events is below a given time threshold (t_thr). For example, a_thr may be of the order of 1,5-2,0° and t_thr may be of the order of 60 ms.

Also optionally, unnaturally short fixations, the duration of which is below a given minimum time threshold (l_min), such as for example 20-60 ms, may be removed in block1430.

Fig. 6A shows an example of the improvement over methods which characterize or classify eye movements directly based on applying a threshold to the second signal (curve b), when using the methods as described herein, in which eye movement characterization (e.g. a classification) is based on the difference signal of first and second signal (curve a). The same datasets were used for determining curves a, b.

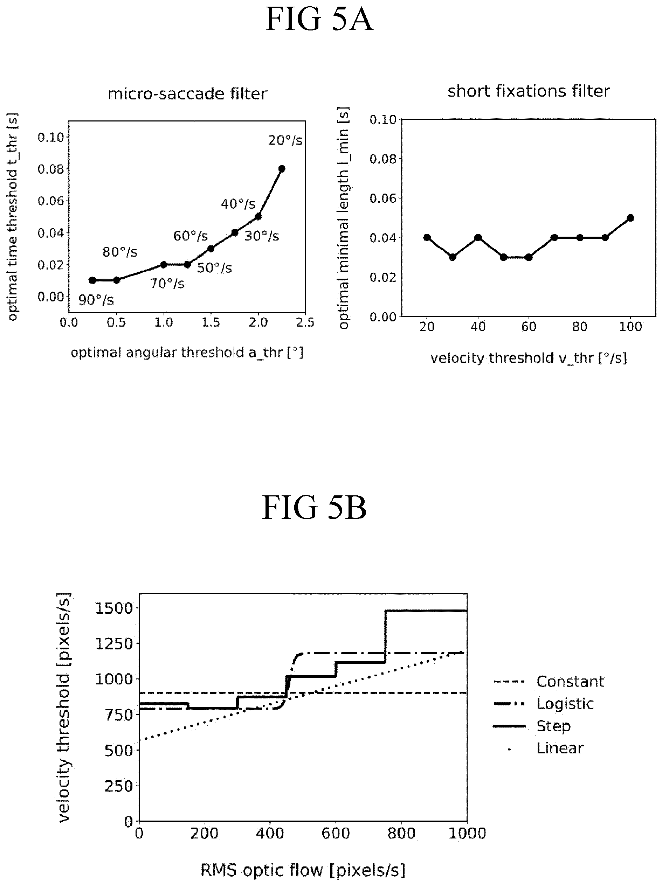

As shown in Fig.5A, parameters and thresholds (a_thr, t_thr_l_min) of the optional post-processing steps may be chosen or determined as a function of each other and/or of the velocity threshold v_thr used in step 1410 of Figs. 4A, 4B. Optimum parameters and thresholds may for example be found by using a grid search or other numerical optimization methods, like e.g. Simulated Annealing. A suitable metric for evaluating which parameters and thresholds are optimum can for example be the Cohen's kappa or an F1-score (e.g. an F1-score evaluated on events after temporal matching of eye movement events as predicted by the method as previously described to eye movement ground truth events as determined by a human annotator, as was done for generating the results shown Figs. 5A/B and 6A), such metrics being known to the skilled person. Evaluation is done on a dataset with known (annotated) ground truth eye movement characteristics or classifications.

As indicated by the dashed arrows in Fig. 4B, application of the velocity threshold v_thr in a step 1410 may in a preferred embodiment be done using an adaptive threshold which is based on either or both of the first and second signal *S*o(t), *Sp*(*t*).

Fig. 5B gives examples of possible parameterized models which can be used to generate an adaptive threshold based on the first signal, in this example based on a Root-Mean-Square measure of global optic flow velocity in a certain time window around each sample. Examples shown include a simple linear-, a logistic- and a step-like functional relationship, all of which have surprisingly been found to outperform using a constant velocity threshold. In this way, using an adaptive velocity threshold which depends on the first signal, even higher accuracy in characterizing or classifying eye movements can be obtained which suits a wider range of application scenarios.

The particular values of these parametric models, like e.g. slope and intercept of the linear function, can be found alone or together with the parameters of the optional post-processing steps previously mentioned, via a grid search or via other numerical optimization algorithms like Simulated Annealing.

The resulting time dependent characteristic C(t) of the eye movements represents a classification of eye movements, in this example a binary classification into saccades and fixations.

In the exemplary embodiment, blocks 1300, 1400 are subsequent to blocks 1100 to 1250.

It is, however, also possible to determine the difference signal Δ*S*(t) and/or the characteristic (C(t) at least partly on the fly as indicated by the dashed-dotted arrows in Fig. 4A.

For example, in each block 1100 one scene image may be determined, while in each block 1200 several eye images are determined, for example if the scene and eye camera operate at different frame rates. Thereafter, the first signal So(t) and the second signal Sp(t) may be updated accordingly.

This may be followed by updating the difference signal Δ*S*(t) and/or updating the characteristic C(t). Updating the difference signal Δ*S*(t) may include amending the difference signal Δ*S*(t) by appending (vector) differences for at least some of the times at which a new eye image was taken. Likewise, updating the characteristic C(t) may include amending the characteristic C(t) by appending a new characteristic for at least some of the times at which the new eye images were taken.

Fig. 6B illustrates a perspective view of a system 500 for characterizing eye movements of a user.

In the exemplary embodiment, system 500 includes a head-wearable device 100 implemented as a spectacles device. Accordingly, a frame of spectacles device 100 has a front portion 114 surrounding a left ocular opening and a right ocular opening. A bridge portion of the front portion 114 is arranged between the ocular openings. Further, a left temple 113 and a right temple 123 are attached to front portion 114.

An exemplary camera module 140 is accommodated in the bridge portion and arranged on the wearer-side of the bridge portion. A passage opening for a scene camera 160 of module 140 and the field of view (FOV) of scene camera 160, respectively, is formed in the bridge portion.

The scene camera 160 is typically centrally arranged, i.e. at least close to a central vertical plane between the left and right ocular openings and/or close to (expected) eye midpoint(s) of the user. The latter also facilitates a compact design. Furthermore, the influence of parallax error for gaze prediction may be reduced this way significantly.

Furthermore, the scene camera 160 may define a Cartesian coordinate system x', y', z' and have an optical axis which is at least substantially arranged in the central vertical plane (to reduce parallax error), arranged in the central x', z'-plane and/or pointing in x'-direction in the exemplary embodiment.

Leg portions 134, 135 of module 140 may at least substantially complement the frame below the bridge portion so that the ocular openings are at least substantially surrounded by material of frame and module 100.

A right eye camera 150 for taking right eye images of the user is arranged in right leg portion 135.

Likewise, a left eye camera 150 for taking left eye images of the user may be arranged in left leg portion 134.

As indicated by the dashed-dotted arrows in Fig. 4B, a computing unit 200 of system 500 is connectable with the scene camera 160 for receiving scene images, and connectable with the eye camera 150 for receiving eye images.

The computing unit 200 typically includes one or more processors and a non-transitory computer-readable storage medium comprising instructions which, when executed by the one or more processors, causes system 500 to carry out the methods as explained herein.

The computer-readable storage medium may in particular include instructions which, when executed by the one or more processors of computing unit 200 or another computer cause the computing unit or the computer to perform the following steps: determining a first motion signal based on and/or referring to a motion reflected in a (received) sequence of scene images of a scene in a field of view of a user, determining a second motion signal based on and/or referring to a motion reflected in a (received) corresponding sequence of eye images of at least a portion of an eye of the user, determining a difference signal between the second signal and the first signal, and characterizing eye movements of the user based on the difference signal.

The computing unit 200 is typically implemented as a controller and may even be arranged within a housing of module 140.

However, the computing unit 200 may also at least in part be provided by a companion device connectable to the head-wearable device 100, for example via a USB-connection (e.g. one of the temples may provide a respective plug or socket), in particular a mobile companion device such as a smartphone, tablet or laptop.

Although various exemplary embodiments of the invention have been disclosed, it will be apparent to those skilled in the art that various changes and modifications can be made which will achieve some of the advantages of the invention without departing from the scope of the invention. It will be obvious to those reasonably skilled in the art that other components performing the same functions may be suitably substituted. It should be mentioned that features explained with reference to a specific figure may be combined with features of other figures, even in those cases in which this has not explicitly been mentioned. Such modifications to the inventive concept are intended to be covered by the appended claims.

Spatially relative terms such as "under", "below", "lower", "over", "upper" and the like are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

With the above range of variations and applications in mind, it should be understood that the present invention is not limited by the foregoing description, nor is it limited by the accompanying drawings. Instead, the present invention is limited only by the following claims.

### Reference numbers

- 100: head-wearable device
- 114: front portion of frame
- 113, 123: temple
- 140: camera module
- 150: (right) eye camera
- 160: scene camera
- 200: controller / computing unit

- 500: system
- 1000-1430: method / method steps
- E₁, E₂, E₃: eye images
- F₁, F₂, F₃: scene images
- C(t): (time dependent) characteristic of the user's eye movements
- *S*o(t): (time dependent) first signal
- *S*p(t): (time dependent) second signal
- Δ*S*(t): (time dependent) difference signal

## Claims

1. A method (1000) for characterizing eye movements of a user, the method comprising:
- generating (1100) a sequence of scene images (F₁, F₂, F₃) of a scene in a field of view of the user, and generating (1200) a corresponding sequence of eye images (E₁, E₂, E₃) of at least a portion of an eye of the user;
- using (1150) the sequence of scene images (F₁, F₂, F₃) to determine a first signal (So(t)) referring to a motion, and using (1250) the sequence of eye images (E₁, E₂, E₃) to determine a second signal (Sp(t)) referring to a motion of the eye of the user, wherein the first signal (So(t)) refers to a velocity in the sequence of scene images (F₁, F₂, F₃) as function of time (t), and wherein the second signal (Sp(t)) refers to a velocity of a gaze point (P₁, P₂, P₃) or to a velocity of the eye of the user as a function of time (t);
- determining (1300) a difference signal (Δ*S*(*t*)) corresponding to a difference between the second signal (*S*p(t)) and the first signal (So(t)); and
- determining (1400) a characteristic (C(t)) of the eye movements based on the difference signal (Δ*S*(t)), determining (1400) the characteristic (C(t)) comprising comparing absolute values of function values of the difference signal (Δ*S*(*t*)) with a threshold (v_thr), the threshold (v_thr) being an adaptive threshold based on the first signal (So(t)).

2. The method of claim 1, wherein determining the characteristic (C(t)) of the eye movements comprises:
- checking if function values of the difference signal *(*Δ*S*(t)) lie within a predetermined range.

3. The method of claim 2, wherein determining the characteristic (C(t)) of the eye movements comprises at least one of:
- detecting a saccade event if the function values of the difference signal (Δ*S*(*t*)) lie outside the range and/or are larger than the threshold (v_thr);
- detecting a fixation event if the function values of the difference signal (Δ*S*(t)) remain within the range, and/or are smaller than or equal to the threshold (v_thr);
- removing a saccade event if a maximum amplitude of the corresponding eye movements is below a given threshold (a_thr) and a duration of the saccade event is below a given time threshold (t_thr);
- removing a fixation event if a duration of the fixation event is below given minimum time threshold (l_min); and
- classifying the eye movements based on the difference signal (Δ*S*(*t*)) into two or more categories.

4. The method of any preceding claim, wherein the first signal (*S*o(t)) refers to a motion in the sequence of scene images (F₁, F₂, F₃), and/or wherein the first signal (*S*o(t)) refers to a motion of a head of the user.

5. The method of any preceding claim, wherein the adaptive threshold (v_thr) is a function of an optic flow value, and/or is based on the second signal (Sp(t)), in particular a function of a noise estimate of the velocity of the gaze point (P₁, P₂, P₃) or the velocity of the eye of the user.

6. The method of any preceding claim, wherein the sequence of scene images (F₁, F₂, F₃) is generated by a scene camera (160) of a head-wearable device (100) worn by the user, wherein the corresponding sequence of eye images (E₁, E₂, E₃) is generated using an eye camera (14, 15) of the head-wearable device (100), wherein the first signal refers to at least one of a motion of at least one object in the sequence of scene images (F₁, F₂, F₃) with respect to the scene camera and/or a head of the user, and a motion of the scene as a whole in the sequence of scene images (F₁, F₂, F₃) with respect to the scene camera and/or the head of the user, and/or wherein a motion of the scene camera and/or the head is reflected in the first signal.

7. The method of any preceding claim, wherein determining the first signal (*S*o(t)) comprises using an optical flow algorithm to process the sequence of scene images (F₁, F₂, F₃) to determine at least one optical flow vector as function of time for the sequence of scene images (F₁, F₂, F₃) and/or at least one respective optical flow vector for pairs of scene images (F₁, F₂, F₃).

8. The method of claim 7, wherein determining the first signal (So(t)) comprises at least one of:
- determining an averaged optical flow vector as a function of time;
- determining one respective averaged optical flow vector for each pair of a sequence of pairs of scene images (F₁, F₂, F₃); and
- determining the function value of the first signal (So(t)) as a function of time based on at least one component of a representative optical flow vector and/or a representative optical flow vector component.

9. The method of claim 8, wherein a global optical flow vector for each pair of subsequent scene images (F₁, F₂, F₃) is determined as the representative optical flow vector for each pair of subsequent scene images (F₁, F₂, F₃).

10. The method of any of the claims 7 to 9, wherein determining the first signal (*S*o(t)) comprises at least one of:
- determining a velocity vector field for each pair of corresponding pixels of the pairs of subsequent scene images (F₁, F₂, F₃);
- determining a velocity vector field for a subset of pairs of corresponding pixels of the pairs of subsequent scene images (F₁, F₂, F₃);
- averaging the respective velocity vector fields to determine the representative optical flow vector for the pairs of subsequent scene images (F₁, F₂, F₃); and
- determine function values of the first signal (*S*o(t)) as a function of the respective optical flow vector fields and/or the representative optical flow vector.

11. The method of claim 10, wherein the subset is a sparse subset of scene image locations.

12. The method of claims 10 or 11, wherein the subset is at least close to at least one of the gaze points (P₁, P₂, P₃) in the two scene images (F₁, F₂, F₃) of the pairs of scene images (F₁, F₂, F₃), and/or wherein the subset represents a grid which is distributed over the entire scene image.

13. The method of any of the claims 7 to 12, wherein the optical flow algorithm is a sparse optical flow algorithm, in particular a Lucas-Kanade algorithm.

14. A system (500) for characterizing eye movements of a user, the system comprising:
- a head-wearable device (100) comprising a scene camera (160) configured to generate a sequence of scene images (F₁, F₂, F₃) of a scene in a field of view of the user wearing the head-wearable device (100), and an eye camera (150) configured to generate a sequence of eye images (E₁, E₂, E₃) of at least a portion of an eye of the user wearing the head-wearable device (100); and
- a computing unit (200) connectable with the scene camera (160) for receiving the sequence of scene images (F₁, F₂, F₃), connectable with the eye camera (150) for receiving the sequence of eye images (E₁, E₂, E₃), and configured to:
∘ use the sequence of scene images (F₁, F₂, F₃) to determine a first signal (*S*o(t)) referring to a motion, and using the sequence of eye images (E₁, E₂, E₃) to determine a second signal (*S*p(t)) referring to a motion of the eye of the user, wherein the first signal (*S*o(t)) refers to a velocity in the sequence of scene images (F₁, F₂, F₃) as function of time (t), and wherein the second signal (*S*p(t)) refers to a velocity of a gaze point (P₁, P₂, P₃) or to a velocity of the eye of the user as a function of time (t),
∘ determine a difference signal (Δ*S*(*t*)) corresponding to a difference between the second signal (*S*p(t)) and the first signal (*S*o(t)), and
∘ determine a characteristic (C(t)) of the eye movements based on the difference signal (Δ*S*(t)), wherein determine the characteristic (C(t)) comprises comparing absolute values of function values of the difference signal (Δ*S*(*t*)) with a threshold (v_thr), the threshold (v_thr) being an adaptive threshold based on the first signal (So(t)).

15. The system of claim 14, wherein the head-wearable device (100) is a spectacles device, an AR-device and/or a VR-device, wherein the computing unit (200) is provided by the head-wearable device (100) or a companion device connectable to the head-wearable device (100), in particular a mobile companion device such as a smartphone, tablet or laptop, or wherein the computing unit is provided by a local desktop, remote desktop or local or remote server and/or wherein the system (500) is configured to perform the methods of any of the claims 1 to 13.

## Patentansprüche

1. Verfahren (1000) zum Charakterisieren von Augenbewegungen eines Nutzers, wobei das Verfahren aufweist:
- Erzeugen (1100) einer Folge von Szenenbildern (F₁, F₂, F₃) einer Szene im Sichtfeld des Nutzers und Erzeugen (1200) einer entsprechenden Folge von Augenbildern (E₁, E₂, E₃) mindestens eines Teils eines Auges des Nutzers;
- Verwenden (1150) der Folge von Szenenbildern (F₁, F₂, F₃), um ein erstes Signal (So(t)) zu bestimmen, das sich auf eine Bewegung bezieht, und Verwenden (1250) der Folge von Augenbildern (E₁, E₂, E₃), um ein zweites Signal (Sp(t)) zu bestimmen, das sich auf eine Bewegung des Auges des Nutzer bezieht, wobei sich das erste Signal (So(t)) auf eine Geschwindigkeit in der Folge von Szenenbildern (F₁, F₂, F₃) als Funktion der Zeit (t) bezieht, und wobei sich das zweite Signal (Sp(t)) auf eine Geschwindigkeit eines Blickpunkts (P₁, P₂, P₃) oder auf eine Geschwindigkeit des Auges des Nutzers als Funktion der Zeit (t) bezieht;
- Bestimmen (1300) eines Differenzsignals *(ΔS(t)),* das einer Differenz zwischen dem ersten Signal (So(t)) und dem zweiten Signal (Sp(t)) entspricht; und
- Bestimmen (1400) einer Eigenschaft (C(t)) der Augenbewegungen auf der Grundlage des Differenzsignals *(ΔS(t)),* wobei das Bestimmen (1400) der Eigenschaft (C(t)) ein Vergleichen von Absolutwerten von Funktionswerten des Differenzsignals (Δ*S*(t)) mit einem Schwellenwert (v_thr) aufweist, und wobei der Schwellenwert (v_thr) ein adaptiver Schwellenwert ist, der auf dem ersten Signal (So(t)) basiert.

2. Verfahren nach Anspruch 1, wobei das Bestimmen der Eigenschaft (C(t)) der Augenbewegungen aufweist:
- Überprüfen, ob die Funktionswerte des Differenzsignals (Δ*S*(t)) innerhalb eines vorgegebenen Bereichs liegen.

3. Verfahren nach Anspruch 2, wobei das Bestimmen der Eigenschaft (C(t)) der Augenbewegungen aufweist:
- Erfassen eines Sakkadenereignisses, wenn die Funktionswerte des Differenzsignals (Δ*S*(t)) außerhalb des Bereichs liegen und/oder größer als der Schwellenwert (v_thr) sind;
- Erkennen eines Fixationsereignisses, wenn die Funktionswerte des Differenzsignals (Δ*S*(t)) innerhalb des Bereichs bleiben und/oder kleiner oder gleich dem Schwellenwert (v_thr) sind;
- Entfernen eines Sakkadenereignisses, wenn eine maximale Amplitude der entsprechenden Augenbewegungen unter einem vorgegebenen Schwellenwert (a_thr) liegt und eine Dauer des Sakkadenereignisses unter einem vorgegebenen Zeitschwellenwert (t_thr) liegt;
- Entfernen eines Fixationsereignisses, wenn eine Dauer des Fixationsereignisses unter einem vorgegebenen Mindestzeit-Schwellenwert (l_min) liegt; und/oder
- Klassifizieren der Augenbewegungen basierend auf dem Differenzsignal (Δ *S*(t)) in zwei oder mehr Kategorien.

4. Verfahren nach einem der vorstehenden Ansprüche, wobei sich das erste Signal (So(t)) auf eine Bewegung in der Folge von Szenenbildern (F₁, F₂, F₃) bezieht und/oder wobei sich das erste Signal (So( t)) auf eine Bewegung des Kopfes des Nutzers bezieht.

5. Verfahren nach einem der vorstehenden Ansprüche, wobei der adaptive Schwellenwert (v_thr) eine Funktion eines optischen Flusswerts ist und/oder auf dem zweiten Signal (Sp(t)) basiert, insbesondere eine Funktion einer Rauschschätzung der Geschwindigkeit des Blickpunkts (P₁, P₂, P₃) oder der Geschwindigkeit des Auges des Nutzers ist.

6. Verfahren nach einem der vorstehenden Ansprüche, wobei die Folge von Szenenbildern (F₁, F₂, F₃) von einer Szenenkamera (160) einer am Kopf tragbaren Vorrichtung (100) erzeugt wird, die vom Nutzer getragen wird, wobei die entsprechende Folge von Augenbildern (E₁, E₂, E₃) unter Verwendung einer Augenkamera (14, 15) der am Kopf tragbaren Vorrichtung (100) erzeugt wird, wobei sich das erste Signal auf eine Bewegung mindestens eines Objekts in der Folge von Szenenbildern (F₁, F₂, F₃) in Bezug auf die Szenenkamera und/oder eine Kopf von dem Nutzer und/oder auf eine Bewegung der Szene als Ganzes in der Folge von Szenenbildern (F₁, F₂, F₃) mit Bezug auf die Szenenkamera und/oder den Kopf des Nutzers bezieht, und/oder wobei eine Bewegung der Szenenkamera und/oder des Kopfes in dem ersten Signal widergespiegelt wird.

7. Verfahren nach einem der vorstehenden Ansprüche, wobei das Bestimmen des ersten Signals (So(t)) das Verwenden eines optischen Flussalgorithmus zum Verarbeiten der Folge von Szenenbildern (F₁, F₂, F₃) umfasst, um mindestens einen optischen Flussvektor als zeitabhängige Funktion für die Folge von Szenen en (F₁, F₂, F₃) und/oder mindestens einen jeweiligen optischen Flussvektor für Paare von Szenenbildern (F₁, F₂, F₃) zu bestimmen.

8. Verfahren nach Anspruch 7, wobei das Bestimmen des ersten Signals (So(t)) mindestens eines von Folgendem aufweist:
- Bestimmen eines gemittelten optischen Flussvektors als Funktion der Zeit;
- Bestimmen eines jeweiligen gemittelten optischen Flussvektors für jedes Paar einer Folge von Paaren von Szenenbildern (F₁, F₂, F₃); und
- Bestimmen des Funktionswertes des ersten Signals (So( t)) als eine Funktion der Zeit basierend auf mindestens einer Komponente eines repräsentativen optischen Flussvektors und/oder einer repräsentativen optischen Flusskomponente.

9. Verfahren nach Anspruch 8, wobei ein globaler optischer Flussvektor für jedes Paar aufeinanderfolgender Szenenbilder (F₁, F₂, F₃) als der repräsentative optische Flussvektor für jedes Paar aufeinanderfolgender Szenenbilder (F₁, F₂, F₃) bestimmt wird.

10. Verfahren nach einem der Ansprüche 7 bis 9, wobei das Bestimmen des ersten Signals (So(t)) mindestens eines von Folgendem aufweist:
- Bestimmen eines Geschwindigkeitsvektorfeldes für jedes Paar entsprechender Pixel der Paare aufeinanderfolgender Szenenbilder (F₁, F₂, F₃);
- Bestimmen eines Geschwindigkeitsvektorfeldes für eine Teilmenge von Paaren von entsprechenden Pixeln der Paare aufeinanderfolgender Szenenbilder (F₁, F₂, F₃);
- Mittelwertbildung der jeweiligen Geschwindigkeitsvektorfelder, um den repräsentativen optischen Flussvektor für die Paare aufeinanderfolgender Szenenbilder (F₁, F₂, F₃) zu bestimmen; und
- Bestimmen von Funktionswerten des ersten Signals (So( t)) als eine Funktion der jeweiligen optischen Flussvektorfelder und/oder des repräsentativen optischen Flussvektors.

11. Verfahren nach Anspruch 10, wobei die Teilmenge eine dünnbesetzte Teilmenge von Szenenbildorten ist.

12. Verfahren nach Anspruch 10 oder 11, wobei die Teilmenge zumindest nahe an mindestens einem der Blickpunkte (P₁, P₂, P₃) in beiden Szenenbildern (F₁, F₂, F₃) der Paare von Szenenbildern (F₁, F₂, F₃) ist, und/oder wobei die Teilmenge ein Gitter darstellt, das über das gesamte Szenenbild verteilt ist.

13. Verfahren nach einem der Ansprüche 7 bis 12, wobei der optische Flussalgorithmus ein spärlicher optischer Flussalgorithmus ist, insbesondere ein Lucas-Kanade-Algorithmus.

14. System (500) zur Charakterisierung von Augenbewegungen eines Nutzers, wobei das System aufweist:
- eine am Kopf tragbare Vorrichtung (100), die eine Szenenkamera (160) aufweist, die so konfiguriert ist, dass sie eine Folge von Szenenbildern (F₁, F₂, F₃) einer Szene in einem Sichtfeld des Nutzers, der die am Kopf tragbare Vorrichtung (100) trägt, erzeugen kann, und eine Augenkamera (150), die so konfiguriert ist, dass sie eine Folge von Augenbildern (E₁, E₂, E₃) von mindestens einem Teil eines Auges des Nutzers, der die am Kopf tragbare Vorrichtung (100) trägt, erzeugen kann; und
- eine Recheneinheit (200), die mit der Szenenkamera (160) verbunden werden kann, um die Folge von Szenenbildern (F₁, F₂, F₃) zu empfangen, die mit der Augenkamera (150) verbunden werden kann, um die Folge von Augenbildern (E₁, E₂, E₃) zu empfangen, und die konfiguriert ist zum:
∘ Verwenden der Folge von Szenenbildern (F₁, F₂, F₃), um ein erstes Signal (So(t)) zu bestimmen, das sich auf eine Bewegung bezieht, und Verwenden der Folge von Augenbildern (E₁, E₂, E₃), um ein zweites Signal (Sp(t)) zu bestimmen, das sich auf eine Bewegung des Auges des Nutzers bezieht, wobei sich das erste Signal (So(t)) auf eine Geschwindigkeit in der Folge von Szenenbildern (F₁, F₂, F₃) als Funktion der Zeit (t) bezieht, und wobei sich das zweite Signal (Sp(t)) auf eine Geschwindigkeit eines Blickpunkts (P₁, P₂, P₃) oder auf eine Geschwindigkeit des Auges des Nutzers als Funktion der Zeit (t) bezieht,
∘ Bestimmen eines Differenzsignal (Δ *S*(t)), das einer Differenz zwischen dem ersten Signal ( Sp(t)) und dem ersten Signal (So(t)) entspricht, und
∘ Bestimmen einer Eigenschaft (C(t)) der Augenbewegungen auf der Grundlage des Differenzsignals (Δ*S*(t)), wobei das Bestimmen der Eigenschaft (C(t)) ein Vergleichen von Absolutwerten von Funktionswerten des Differenzsignals (Δ *S*(t)) mit einem Schwellenwert (v_thr) aufweist, und wobei der Schwellenwert (v_thr) ein adaptiver Schwellenwert auf der Grundlage des ersten Signals (So(t)) ist.

15. System nach Anspruch 14, wobei die am Kopf tragbare Vorrichtung (100) eine Brillenvorrichtung, eine AR-Vorrichtung und/oder eine VR-Vorrichtung ist, wobei die Recheneinheit (200) von der am Kopf tragbaren Vorrichtung (100) oder einer Begleitvorrichtung bereitgestellt wird, die mit der am Kopf tragbaren Vorrichtung (100) verbindbar ist, insbesondere einer mobilen Begleitvorrichtung wie ein Smartphone, Tablet oder Laptop, oder wobei die Recheneinheit durch einen lokalen Desktop, einen Remote-Desktop oder einen lokalen oder Remote-Server bereitgestellt wird und/oder wobei das System (500) so konfiguriert ist, dass es die Verfahren nach einem der Ansprüche 1 bis 13 ausführt.

## Revendications

1. Procédé (1000) destiné à caractériser les mouvements oculaires d'un utilisateur, le procédé comprenant les étapes suivantes :
- générer (1100) une séquence d'images de scène (F₁, F₂, F₃) d'une scène dans un champ de vision de l'utilisateur, et générer (1200) une séquence d'images oculaires (E₁, E₂, E₃) correspondante d'au moins une partie d'un œil de l'utilisateur ;
- utiliser (1150) la séquence d'images de scène (F₁, F₂, F₃) pour déterminer un premier signal (So(t)) se rapportant à un mouvement, et utiliser (1250) la séquence d'images oculaires (E₁, E₂, E₃) pour déterminer un deuxième signal (Sp(t)) se rapportant à un mouvement de l'œil de l'utilisateur, dans lequel le premier signal (So(t)) se rapporte à une vitesse dans la séquence d'images de scène (F₁, F₂, F₃) en fonction du temps (t), et dans lequel le deuxième signal (Sp(t)) se rapporte à une vitesse d'un point de regard (P₁, P₂, P₃) ou à une vitesse d'un œil de l'utilisateur en fonction du temps (t) ;
- déterminer (1300) un signal de différence ((ΔS(t)) correspondant à une différence entre le deuxième signal (Sp(t)) et le premier signal (So(t)) ; et
- déterminer (1400) une caractéristique (C(t)) des mouvements oculaires sur la base du signal de différence ((ΔS(t)), déterminer (1400) la caractéristique (C(t)) comprenant la comparaison des valeurs absolues de valeurs de fonction du signal de différence ((ΔS(t)) avec un seuil (v_thr), le seuil (v_thr) étant un seuil adaptatif basé sur le premier signal (So(t)).

2. Procédé selon la revendication 1, dans lequel la détermination de la caractéristique (C(t)) des mouvements oculaires comprend l'opération suivante :
- vérifier si les valeurs de fonction du signal de différence ((ΔS(t)) se situent dans une plage prédéterminée.

3. Procédé selon la revendication 2, dans lequel la détermination de la caractéristique (C(t)) des mouvements oculaires comprend au moins l'une des opérations suivantes :
- détecter un événement de saccade si les valeurs de fonction du signal de différence ((ΔS(t)) se situent en dehors de la plage et/ou sont supérieures au seuil (v_thr) ;
- détecter un événement de fixation si les valeurs de fonction du signal de différence ((ΔS(t)) restent dans la plage et/ou sont inférieures ou égales au seuil (v_thr) ;
- supprimer un événement de saccade si l'amplitude maximale du mouvement oculaire correspondant est en dessous d'un seuil donné (a_thr) et que la durée de l'événement de saccade est en dessous d'un seuil de temps donné (t_thr) ;
- supprimer un événement de fixation si la durée de l'événement est en dessous d'un seuil de temps minimal donné (l_min) ; et
- classer les mouvements oculaires en deux catégories ou plus sur la base du signal de différence ((ΔS(t)).

4. Procédé selon l'une des revendications précédentes, dans lequel le premier signal (So(t)) se rapporte à un mouvement dans la séquence d'images de scène (F₁, F₂, F₃), et/ou dans lequel le premier signal (So(t)) se rapporte à un mouvement de la tête de l'utilisateur.

5. Procédé selon l'une des revendications précédentes, dans lequel le seuil (v_thr) adaptatif est une fonction d'une valeur de flux optique, et/ou est basé sur le deuxième signal (Sp(t)), en particulier une fonction d'une estimation de bruit de la vitesse du point de regard (P₁, P₂, P₃) ou de la vitesse de l'œil de l'utilisateur.

6. Procédé selon l'une des revendications précédentes, dans lequel la séquence d'images de scène (F₁, F₂, F₃) est générée par une caméra de scène (160) d'un dispositif se portant sur la tête (100) porté par l'utilisateur, dans lequel la séquence d'images oculaires (E₁, E₂, E₃) correspondante est générée à l'aide d'une caméra oculaire (14, 15) du dispositif se portant sur la tête (100), dans lequel le premier signal se rapporte à au moins un parmi un mouvement d'au moins un objet dans la séquence d'images de scène (F₁, F₂, F₃) par rapport à la caméra de scène et/ou à la tête de l'utilisateur, et un mouvement de la scène dans son ensemble dans la séquence d'images de scène (F₁, F₂, F₃) par rapport à la caméra de scène et/ou à la tête de l'utilisateur, et/ou dans lequel un mouvement de la caméra de scène et/ou de la tête se reflète dans le premier signal.

7. Procédé selon l'une des revendications précédentes, dans lequel la détermination du premier signal (So(t)) comprend l'utilisation d'un algorithme de flux optique destiné à traiter la séquence d'images de scène (F₁, F₂, F₃) pour déterminer au moins un vecteur de flux optique en fonction du temps pour la séquence d'images de scène (F₁, F₂, F₃) et/ou au moins un vecteur de flux optique respectif pour des paires d'images de scène (F₁, F₂, F₃).

8. Procédé selon la revendication 7, dans lequel la détermination du premier signal (So(t)) comprend au moins l'une des opérations suivantes :
- déterminer une moyenne de vecteur de flux optique en fonction du temps ;
- déterminer une moyenne de vecteur de flux optique respective pour chaque paire d'une séquence de paires d'images de scène (F₁, F₂, F₃) ; et
- déterminer la valeur de fonction du premier signal (So(t)) en fonction du temps sur la base d'au moins une composante du vecteur de flux optique représentatif et/ou de la composante de vecteur de flux optique représentatif.

9. Procédé selon la revendication 8, dans lequel un vecteur de flux optique global pour chaque paire d'images de scène (F₁, F₂, F₃) suivantes est déterminé comme vecteur de flux optique représentatif pour chaque paire d'images de scène (F₁, F₂, F₃) suivantes.

10. Procédé selon l'une des revendications 7 à 9, dans lequel la détermination du premier signal (So(t)) comprend au moins l'une des opérations suivantes :
- déterminer un champ de vecteur de vitesse pour chaque paire de pixels correspondants des paires d'images de scène (F₁, F₂, F₃) suivantes ;
- déterminer un champ de vecteur de vitesse pour un sous-ensemble de paires de pixels correspondants des paires d'images de scène (F₁, F₂, F₃) suivantes ;
- moyenner les champs de vecteur de vitesse respectifs pour déterminer le vecteur de flux optique représentatif pour les paires d'images de scène (F₁, F₂, F₃) suivantes ; et
- déterminer les valeurs de fonction du premier signal (So(t)) en fonction des champs de vecteur de flux optique respectifs et/ou du vecteur de flux optique représentatif.

11. Procédé selon la revendication 10, dans lequel le sous-ensemble est un sous-ensemble clairsemé d'emplacements d'image de scène.

12. Procédé selon la revendications 10 ou 11, dans lequel le sous-ensemble est au moins proche d'au moins un des points de regard (P₁, P₂, P₃) dans les deux images de scène (F₁, F₂, F₃) des paires d'images de scène (F₁, F₂, F₃), et/ou dans lequel le sous-ensemble représente une grille répartie sur la totalité de l'image de scène.

13. Procédé selon l'une des revendications 7 à 12, dans lequel l'algorithme de flux optique est un algorithme de flux optique clairsemé, en particulier un algorithme de Lucas-Kanade.

14. Système (500) destiné à caractériser les mouvements oculaires d'un utilisateur, le système comprenant :
- un dispositif se portant sur la tête (100) comprenant une caméra de scène (160) configurée pour générer une séquence d'images de scène (F₁, F₂, F₃) d'une scène dans un champ de vision de l'utilisateur portant le dispositif se portant sur la tête (100), et une caméra oculaire (150) configurée pour générer une séquence d'images oculaires (E₁, E₂, E₃) d'au moins une partie d'un œil de l'utilisateur portant le dispositif se portant sur la tête (100) ; et
- une unité de calcul (200) connectable à la caméra de scène (160) pour recevoir la séquence d'images de scène (F₁, F₂, F₃), connectable à la caméra oculaire (150) pour recevoir la séquence d'images oculaires (E₁, E₂, E₃), et configurée pour :
∘ utiliser la séquence d'images de scène (F₁, F₂, F₃) pour déterminer un premier signal (So(t)) se rapportant à un mouvement, et utiliser la séquence d'images oculaires (E₁, E₂, E₃) pour déterminer un deuxième signal (Sp(t)) se rapportant à un mouvement de l'œil de l'utilisateur, dans lequel le premier signal (So(t)) se rapporte à une vitesse dans la séquence d'images de scène (F₁, F₂, F₃) en fonction du temps (t), et dans lequel le deuxième signal (Sp(t)) se rapporte à une vitesse d'un point de regard (P₁, P₂, P₃) ou à une vitesse d'un œil de l'utilisateur en fonction du temps (t),
∘ déterminer un signal de différence ((ΔS(t)) correspondant à une différence entre le deuxième signal (Sp(t)) et le premier signal (So(t)), et
∘ déterminer une caractéristique (C(t)) des mouvements oculaires sur la base du signal de différence ((ΔS(t)), dans lequel la détermination de la caractéristique (C(t)) comprend la comparaison des valeurs absolues de valeurs de fonction du signal de différence ((ΔS(t)) avec un seuil (v_thr), le seuil (v_thr) étant un seuil adaptatif basé sur le premier signal (So(t)).

15. Système selon la revendication 14, dans lequel le dispositif se portant sur la tête (100) est un dispositif de lunettes, un dispositif de réalité augmentée et/ou un dispositif de réalité virtuelle, dans lequel l'unité de calcul (200) est fournie par le dispositif se portant sur la tête (100) ou un dispositif compagnon connectable au dispositif se portant sur la tête (100), en particulier un dispositif compagnon mobile tel qu'un téléphone intelligent, une tablette ou un ordinateur portable, ou dans lequel l'unité de calcul est fournie par un ordinateur de bureau local, un ordinateur de bureau distant ou un serveur local ou distant, et/ou dans lequel le système (500) est configuré pour mettre en œuvre les procédés selon l'une des revendications 1 à 13.
